# EUROPEAN PATENT SPECIFICATION

(11) **EP 2 386 505 B1**
(45) Date of publication and mention of the grant of the patent: **02.11.2016**
(21) Application number: 10729184.1
(22) Date of filing: 08.01.2010
(51) Int. Cl.: B65G 15/30, B65G 43/02

(54) **CONVEYOR BELT**
FÖRDERBAND
COURROIE TRANSPORTEUSE

(30) Priority: 08.01.2009 JP 2009002923
(43) Date of publication of application: 16.11.2011
(73) Proprietor: Bridgestone Corporation, Tokyo 104-8340 (JP)
(72) Inventor: SAKAGUCHI, Toshiki, Kanagawa 244-8510 (JP)
(74) Representative: Oxley, Robin John George
(86) International application number: PCT/JP2010/000090
(87) International publication number: WO 2010/079764

(56) References cited:
- AU-B2- 467 441
- DE-A1- 19 911 640
- JP-A- 2006 052 039
- JP-U- 2 099 819
- JP-U- 53 020 787
- JP-U- 53 020 787
- US-B2- 7 353 937

## Description

### TECHNICAL FIELD

The present invention relates to a conveyor belt which is employed in a belt conveyor apparatus which is provided with a plurality of rollers, according to the preamble of claim 1.

### BACKGROUND ART

Conventionally, in a belt conveyor apparatus for conveying materials (transportation materials such as earth and sand or coal), an endlessly shaped conveyor belt is driven on a plurality of rollers by means of a driving pulley. The plurality of rollers is provided at a lower side of the conveyor belt. Specifically, a carrier roller is provided at a back side of an article placement face, and a return roller is provided at an opposite side of the carrier roller.

In such a belt conveyor apparatus, each of the rollers needs to always smoothly rotate in order to prevent damage of the conveyor belt or the like. In particular, if a conveyance distance is long (for example, 10 km or more), since a huge amount of rollers are provided, a method of speedily and easily detecting a roller at which a failure such as a rotational failure occurs is mandatory.

Therefore, it is known that there is provided a belt conveyor apparatus in which a detection unit including a sensor for detecting a rotational failure of a roller and a processing portion such as a CPU for processing an output signal from the sensor are provided at their respective rollers (for example, Patent Document 1).

### PRIOR ART LITERATURE

### Patent Documents

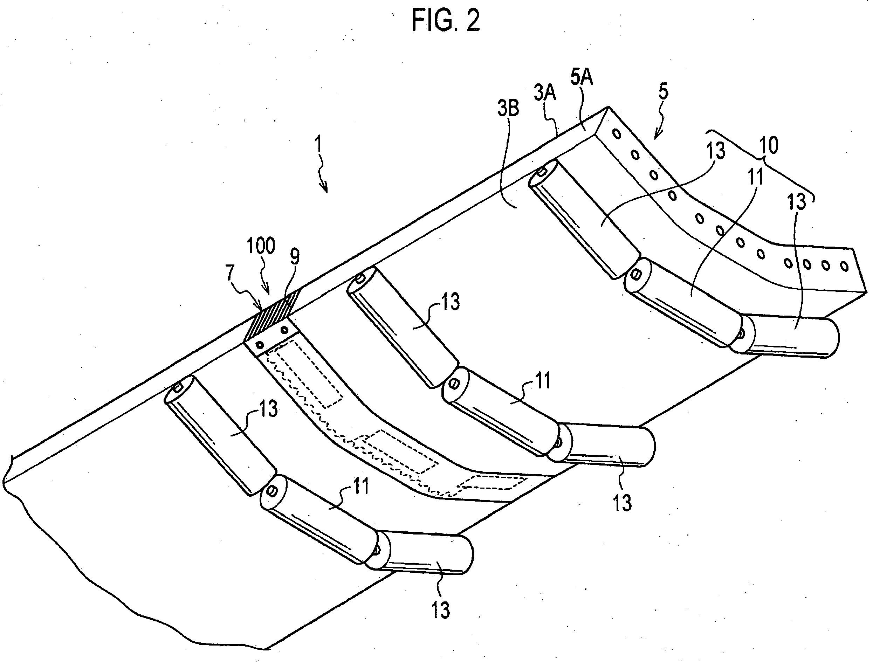

Patent Document 1: Japanese Patent Application Laid-open No. 2005-24441 (pages 6 to 7, Fig. 2). US7353937 discloses a conveyor belt according to the preamble of claim 1, in which compression and/or thrust stress patterns are measured by a measuring means embedded in the belt.

### SUMMARY OF THE INVENTION

The conventional belt conveyor apparatus described above has entailed the following problem. That is, since a detection unit for detecting a rotational failure of a roller is provided at each roller, there has been a problem that costs of the belt conveyor apparatus increase.

In addition, since a sensor and a processing portion are provided at their respective rollers, there has been a problem that a frequency of a failure of a detection unit increases.

Therefore, it is an object of the present invention to provide a conveyor belt which is capable of reliably detecting a failure of a respective one of rollers while suppressing higher costs of a belt conveyor apparatus or a frequency of a failure of a detection unit in the belt conveyor apparatus which is provided with a number of rollers.

To solve the above problem, the present invention has following features. Firstly, the feature of the present invention is summarized as a conveyor belt (conveyor belt 1) employed in a belt conveyor apparatus which including: a plurality of rollers (rollers 10); a detection portion (detection portion 110) configured to detect a state of the rollers; and a processing portion (processing portion 120) configured to connect to the detection portion, for processing an output signal from the detection portion, wherein the conveyor belt has a mount portion (mount portion 7) on which the processing portion is mounted, the mount portion is provided at a widthwise end part of the conveyor belt.

According to such features, a processing portion is mounted on a mount portion which is provided at a widthwise end part of a conveyor belt. In this manner, in comparison with a case in which a detection portion or the processing portion is provided at each roller, the number of detection portions or processing portions is reduced and costs of the belt conveyor apparatus can be suppressed. In addition, with a fewer detection portions or processing portions, a failure of a detection unit can be suppressed. Therefore, the belt conveyor apparatus which is provided with a number of rollers is capable of reliably detecting a failure of the respective one of the rollers while suppressing higher costs of the belt conveyor apparatus or the frequency of the failure of the detection unit.

A second feature of the present invention according to the first feature is summarized as that the mount portion includes a cutout (cutout 9) which is formed at the widthwise end part as seen in a plan view of the conveyor belt; and the processing portion is positioned in the cutout as seen in the plan view of the conveyor belt.

A third feature of the present invention according to the first or second feature is summarized as that a thickness (D1) of the processing portion is smaller than a thickness (D2) of the conveyor belt.

A fourth feature of the present invention according to the third feature is summarized as the conveyor belt, including: a placement face side plate (placement face side plate 21) arranged at a placement face side (material placement face 3A side) of the conveyor belt on which an article to be conveyed is to be placed, the placement face side plate covering the cutout; a back face side plate (back face side plate 23) arranged at a back face side (back face 3B side) of the conveyor belt that is positioned at an opposite side of the placement face side, the back face side plate covering the cutout; and a link member (link member 25) configured to link the placement face side plate and the back face side plate with each other, wherein the processing portion is positioned between the placement face side plate and the back face side plate.

A fifth feature of the present invention according to any one of the first to fourth features is summarized as that the detection portion is provided at the back face side of the conveyor belt that comes into contact with the rollers and the detection portion is covered with a covering member (covering member 115).

A sixth feature of the present invention according to any one of the first to fifth features is summarized as that the detection portion is embedded in the conveyor belt.

A seventh feature of the present invention according to any one of the first to sixth features is summarized as that a connector (connector 130) which is connected to a signal cable for transmitting an output signal from the detection portion and to which the processing portion is connected, is provided at the widthwise end part.

A eighth feature of the present invention according to the seventh feature is summarized as that the connector is provided on a cutout forming face (e.g. end part parallel face 9a) of the conveyor belt, the cutout forming face forming the cutout.

According to the present invention, it is possible to provide a conveyor belt capable of reliably detecting a failure of a respective one of rollers while suppressing higher costs of a belt conveyor apparatus or a frequency of a failure of a detection unit in the belt conveyor apparatus which is provided with a number of rollers.

### BRIEF DESCRIPTION OF THE DRAWINGS

[Fig. 1]

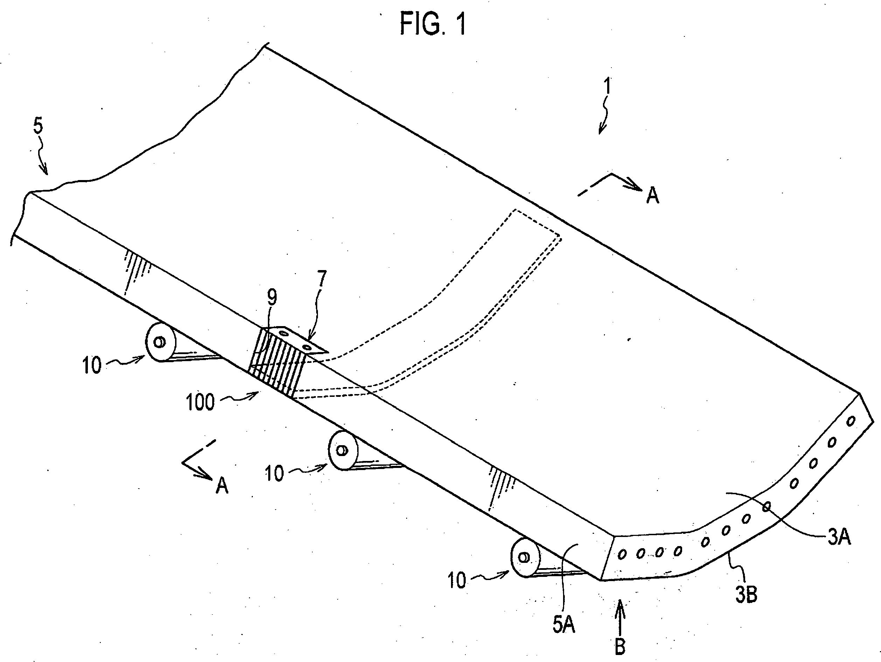

   Fig. 1 is a perspective view showing a conveyor belt 1 according to the embodiment (the perspective view of a top face side).
[Fig. 2]
   Fig. 2 is a perspective view showing the conveyor belt 1 according to the embodiment (the perspective view of a bottom face side).
[Fig. 3]

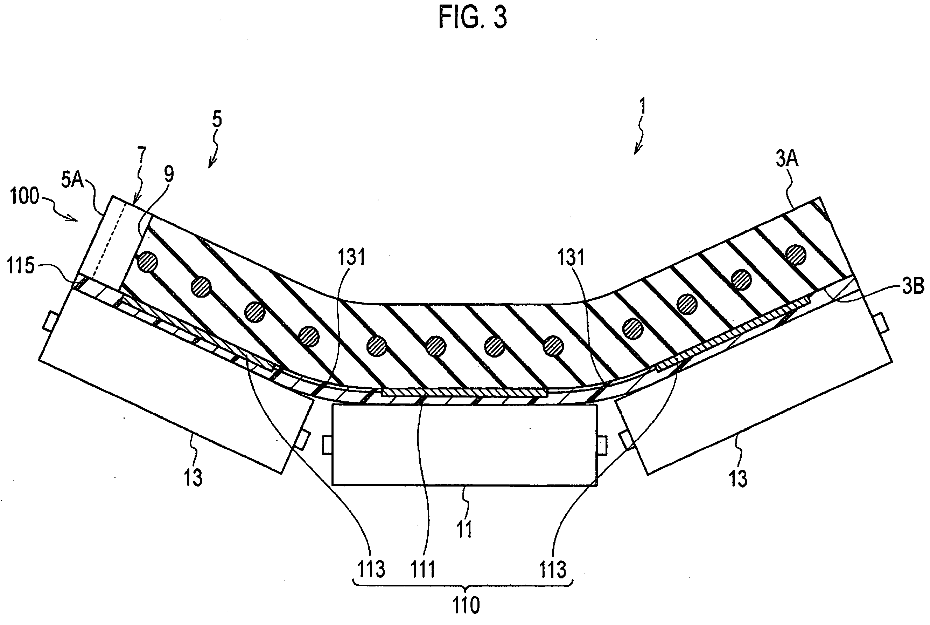

   Fig. 3 is a sectional view showing the conveyor belt 1 according to the embodiment (the sectional view taken along the line A-A of Fig. 1).
[Fig. 4]

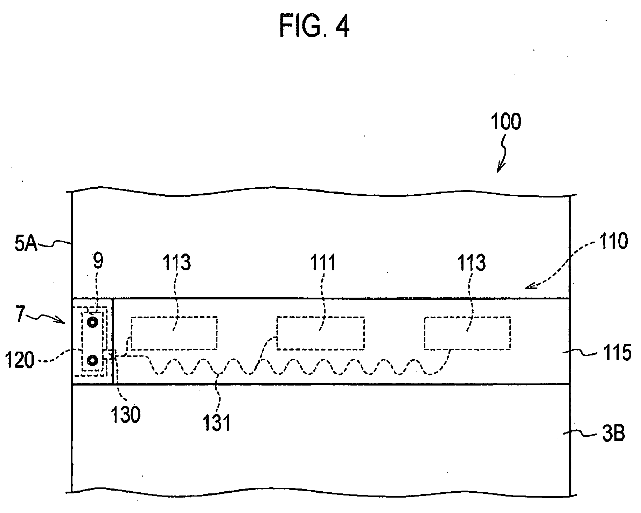

   Fig. 4 is a plan view showing the conveyor belt 1 according to the embodiment (the plan view indicated by the arrow B of Fig. 1)
[Fig. 5]

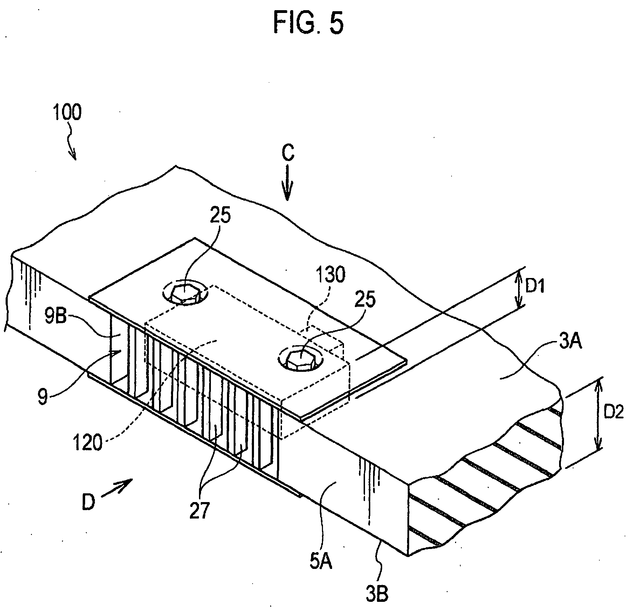

   Fig. 5 is an enlarged perspective view showing a widthwise end part 5 of the conveyor belt 1 according to the embodiment.
[Fig. 6]

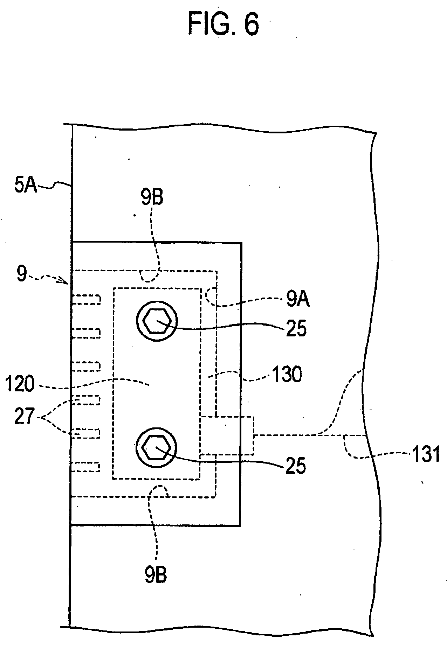

   Fig. 6 is a plan view showing the widthwise end part 5 of the conveyor belt 1 according to the embodiment (the plan view indicated by the arrow C of Fig. 5).
[Fig. 7]

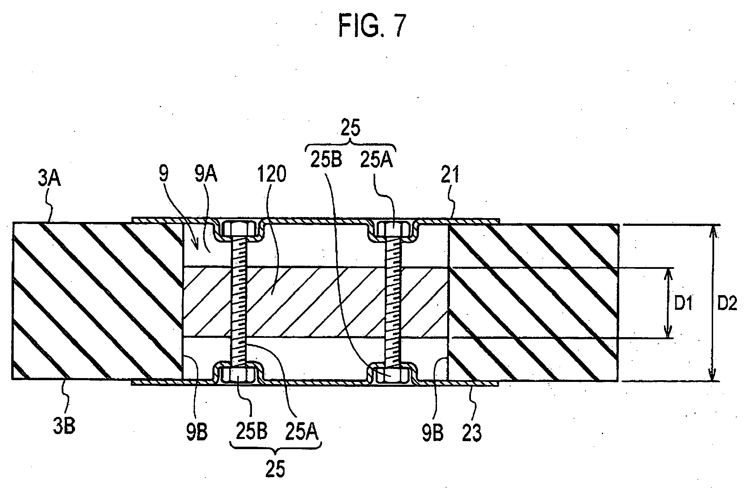

   Fig. 7 is a plan view showing the widthwise end part 5 of the conveyor belt 1 according to the embodiment (the plan view indicated by the arrow D of Fig. 5).
[Fig. 8]

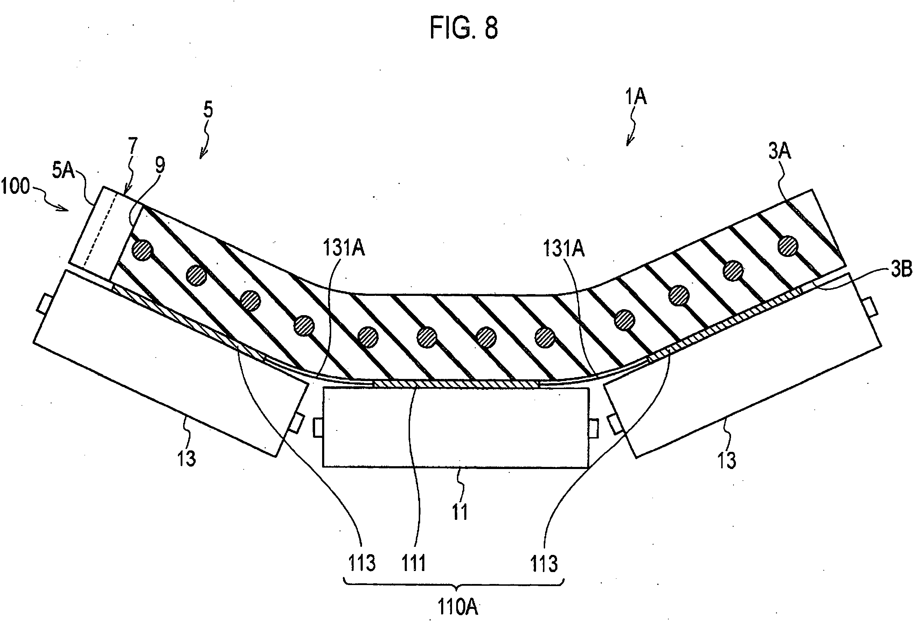

   Fig. 8 is a sectional view showing a conveyor belt 1A according to Exemplary Modification 1.
[Fig. 9]

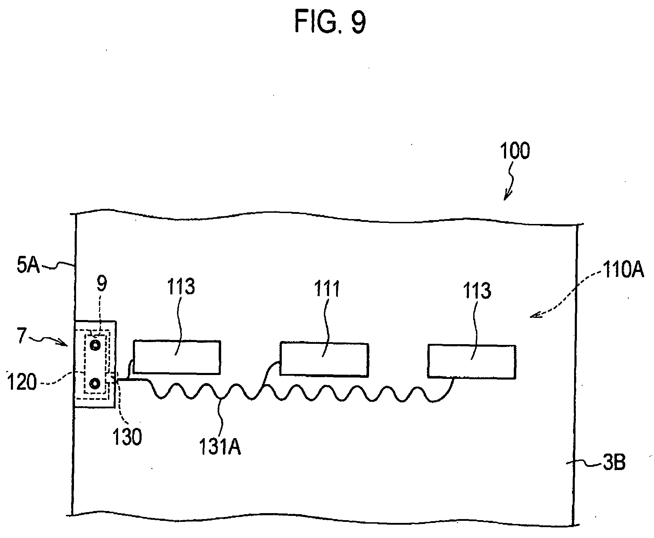

   Fig. 9 is a plan view showing the conveyor belt 1A according to Exemplary Modification 1.
[Fig. 10]

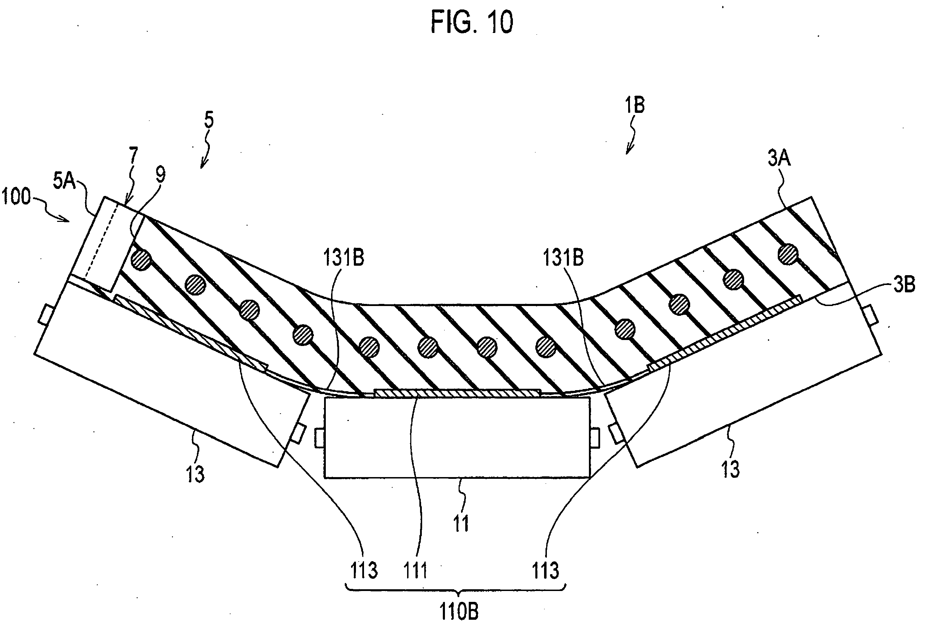

   Fig. 10 is a sectional view showing a conveyor belt 1B according to Exemplary Modification 2.
[Fig. 11]

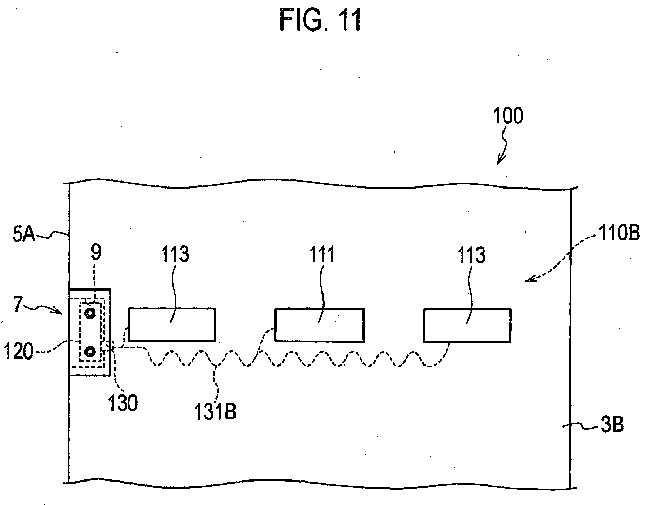

   Fig. 11 is a plan view showing the conveyor belt 1B according to Exemplary Modification 2.

### BEST MODE FOR CARRYING OUT THE INVENTION

Next, an embodiment of a conveyor belt according to the present invention will be described with reference to the drawings. Specifically, descriptions will be furnished with respect to (1) Structure of Conveyor Belt, (2) Structure of Detection Unit, (3) Functions and Advantageous Effects, (4) Exemplary Modifications, and (5) Other Embodiments

In the description of the drawings that follows, the same or similar constituent elements are designated by the same or similar reference numerals. However, it should be kept in mind that: the drawings are merely schematic; and rates of dimensions each are different from an actual one.

Therefore, specific dimensions or the like should be determined in consideration of the following description. In addition, it is a matter of course that portions with their different dimensional interrelationships or rates are included in the drawings.

### (1) Structure of Conveyor Belt

First, a structure of a conveyor belt 1 according to the embodiment will be described with reference to the drawings. Fig. 1 and Fig. 2 are perspective views showing the conveyor belt 1 according to the embodiment. Fig. 3 is a sectional view showing the conveyor belt 1 according to the embodiment (the sectional view taken along the line A-A of Fig. 1). Fig. 4 is a plan view showing the conveyor belt 1 according to the embodiment (the plan view indicated by the arrow B of Fig. 1).

As shown in Fig. 1 to Fig. 4, an endlessly shaped conveyor belt 1 is employed in a belt conveyor apparatus which is provided with a plurality of rollers 10 and a detection unit 100. The conveyor belt 1 is driven on the plurality of rollers 10 by means of a driving pulley (not shown).

The rollers 10 are provided at a lower side of the endlessly shaped conveyor belt 1. The plurality of rollers 10 are arranged at predetermined intervals (for example, 1 m) with respect to a conveyance direction of the conveyor belt 1. In addition, three rollers 10 are disposed in a state in which they are arranged in a widthwise direction of the conveyor belt 1.

Specifically, the rollers 10 includes: a central roller 11 which is positioned at a center at the side of a back face 3B of a material placement face 3A of the conveyor belt 1 in the widthwise direction of the conveyor belt 1; and an end part roller 13 which is positioned at each end of the central roller 11. The end part roller 13 is provided so as to be inclined with respect to the central roller 11.

Herein, the conveyor belt 1 has a mount portion 7 which is provided at a widthwise end part 5 of the conveyor belt 1 and which is mounting a processing portion 120 which constituting a detection unit 100 to be described later. Specifically, the mount portion 7 is provided on a side end face 5A of the conveyor belt 1. The mount portion 7 includes a cutout 9 which is formed at the widthwise end part 5 as seen in a plan view of the conveyor belt 1 (refer to Fig. 3).

The cutout 9 is comprised of: an end part parallel face 9A which is provided in substantial parallel to the widthwise end part 5 of the conveyor belt 1; and two end part orthogonal faces 9B which are provided so as to be substantially orthogonal to the widthwise end unit 5.

### (2) Structure of Detection Unit

Next, a detection unit 100 according to the embodiment will be described with reference to Fig. 1 to Fig. 7. Fig. 5 is an enlarged perspective view showing a widthwise end part 5 of a conveyor belt 1 according to the embodiment. Fig. 6 is a plan view showing the widthwise end part 5 of the conveyor belt 1 according to the embodiment (the plan view indicated by the arrow C of Fig. 5). Fig. 7 is a side view showing the widthwise end part 5 of the conveyor belt 1 according to the embodiment (the plan view indicated by the arrow D of Fig. 5).

As shown in Fig. 1 to Fig. 7, the detection unit 100 detects a failure of a roller 10. Specifically, the detection unit 100 is provided with a detection portion 110, a processing portion 120, and a connector 130.

Here, for example, methods of detecting a failure of a roller 10 by means of the detection unit 100 include a method of always performing measurement by means of the detection unit 100, a method of switching on or off by providing a switch unit, and a method of switching on or off from the outside (noncontact manner) by means of a remote controller or the like. It is preferable that, in a case where the detection unit 100 does not detect a failure of the roller 10, the detection unit 100 is structured to be demountable from the conveyor belt 1.

### (2-1) Detection portion

A detection portion 110 is a pressure sensor which detects a state of a plurality of rollers 10. The detection portion 110 is embedded in a back face 3B of an article placement face 3A. The detection portion 110, like the rollers 10, is arranged in plurality at predetermined intervals (for example, 1m) with respect to a conveyance direction of the conveyor belt 1. In addition, three detection portions 110 are disposed in a state in which they are arranged in the widthwise direction of the conveyor belt 1.

Specifically, the detection 110 has: a central sensor 111 which is positioned upward of the central roller 11; and an end part sensor 113 which is positioned at each end of the central sensor 111, i.e., upward of an end part roller 13.

The central sensor 111 and the end part sensor 113 (the detection portion 110) are covered with a continuous covering member 115 which is continuous in the widthwise direction of the conveyor belt 1. The covering member 115 includes silicone or the like.

The central sensor 111 and the end part sensor 113 are connected to each other by means of a connector 130 and a signal cable 131 to be described later. Namely, the signal cable 131 is covered with the covering member 115, together with the central sensor 111 and the end part sensor 113. The signal cable 131 is disposed in a wavy shape.

### (2-2) Processing portion

A processing portion 120 is connected to the detection portion 110, and processes an output signal from the detection portion 110. Namely, the processing portion 120 is connected to the detection portion 110 via a connector 130 by routing the signal cable 131.

The processing portion 120 is comprised of: a CPU for processing an output signal from the detection portion 110; a memory for storing the output signal from the detection portion 110; and batteries for accumulating electric power; and an antenna for making wireless communication with the outside. The processing portion 120 is structured to be demountable from the connector 130.

A thickness (D1) of the processing portion 120 is smaller than a thickness (D2) of the conveyor belt 1. The processing portion 120 is positioned in a cutout 9 as seen in a plan view of the conveyor belt 1. Specifically, the processing portion 120 is fixed by means of a link member 25 between a placement face side plate 21 and a back face side plate 23.

The placement face side plate 21 is arranged on the side of an article placement face 3A (on the placement face side) of the conveyor belt 1 on which a material to be conveyed is to be placed, and the cutout 9 is covered therewith. The back face side plate 23 is arranged at the side of a back face 3B of the conveyor belt 1 that is positioned at an opposite side of the side of the article placement face 3A, and the cutout 9 is covered therewith.

The link member 25 links the placement face side plate 21 and the back face side plate 23 with each other. The link member 25 is comprised of a bolt 25A to be inserted through the placement face side plate 21, the back face side plate 23, and the processing portion 120; and a nut 25B to be spirally fitted to an end part of the bolt 25A. The link member 25 is inserted through the placement face side plate 21, the back face side plate 23, and the processing portion 120, whereby the processing portion 120 is positioned in the cutout 9.

Herein, a cooling fin 27 (refer to Fig. 5 and Fig. 6) for thermally radiating the processing portion 120 (for example, the CPU or batteries) is provided between the placement face side plate 21 and the back face side plate 23. The cooling fin 27 is provided along a side part face 5A of the conveyor belt 1.

### (2-3) Connector

The connector 130 is connected to the signal cable 131 for transmitting an output signal from the detection portion 110 and the processing portion 120 is connected thereto (refer to Fig. 3 and Fig. 4). The connector 130 is provided on an end part parallel face 9A (a cutout forming face) of the conveyor belt 1 forming the cutout 9. The connector 130 does not always need to be provided on the end part parallel face 9A, and may be provided on an end part orthogonal face 9B.

### (3) Functions and Advantageous Effects

In the embodiment, the processing portion 120 is mounted on the mount portion 7 that is provided at the widthwise end part 5 of the conveyor belt 1. In this manner, in comparison with a case in which the detection portion 110 or the processing portion 120 is provided at each roller 10, the number of detection portions 110 or processing portions 120 is reduced, and costs of the belt conveyor apparatus can be suppressed. In addition, with a fewer detection portions 110 or processing portions 120, a failure of the detection unit 100 can be suppressed. Therefore, the belt conveyor apparatus which is provided with a number of rollers 10 is capable of reliably detecting a failure of the respective one of the rollers 10 while suppressing higher costs of the belt conveyor apparatus or the frequency of a failure of the detection unit 100.

In the embodiment, the mount portion 7 is provided on a side end face 5A of the conveyor belt 1. In this manner, in comparison with a case in which the mount portion 7 is provided at the side of the back face 3B of the conveyor belt 1, a failure of the processing portion 120 that is mounted on the mount portion 7 can be further suppressed and the processing portion 120 is easily demounted.

Specifically, a material drops on the article placement face 3A, whereby, when the material is placed on the article placement face 3A, an impact of the material is imparted onto the article placement face 3A. Thus, in a case where the mount portion 7 is provided at the side of the back face 3B of the conveyor belt 1, the failure of the processing portion 120 that is mounted on the mount portion 7 increases in probability. On the other hand, the mount portion 7 is provided on the side end face 5A of the conveyor belt 1, whereby, even in a case where an impact of a material is imparted onto the article placement face 3A, the impact of the material is hardly imparted onto the side end face 5A of the conveyor belt 1, and the failure of the processing portion 120 that is mounted on the mount portion 7 can be further suppressed.

In the embodiment, the processing portion 120 is positioned in the cutout 9 as seen in a plan view of the conveyor belt 1. In this manner, in comparison with a case in which the processing portion 120 is merely provided on the side end face 5A of the conveyor belt 1, the processing portion 120 never protrudes from the side end face 5A to the outside in the widthwise direction of the conveyor belt 1. Therefore, space saving can be achieved without increasing the width of the conveyor belt 1. Further, it is possible to prevent the processing portion 120 from being damaged due to the processing portion 120 coming into contact with the belt conveyor apparatus which is provided with the conveyor belt 1 (for example, a frame).

In the embodiment, a thickness (D1) of the processing portion 120 is smaller than a thickness (D2) of the conveyor belt 1. Thus, the processing portion 120 never protrudes from the article placement face 3A of the conveyor belt 1. Therefore, the failure of the processing portion 120 can be further suppressed without coming into contact between a material which is conveyed after placed on the article placement face 3A or the belt conveyor apparatus (for example, a belt cleaner for cleaning a dirt adhering to the material placemen face 3A) or the like and the processing portion 120.

In the embodiment, the processing portion 120 is positioned between the placement face side plate 21 and the back face side plate 23. In this manner, the processing portion 120 is covered with the placement face side plate 21 and the back face side plate 23, so that the failure of the processing portion 120 can be reduced more reliably without the abovementioned material or the belt conveyor apparatus (for example, the belt cleaner) and the processing portion 120 coming into contact with each other.

In the embodiment, the link member 25 (the bolt 25A) is inserted through the placement face side plate 21, the back face side plate 23, and the processing portion 120. In this manner, the processing portion 120 is easily demounted, and maintenance capability is improved. In addition, it is possible to suppress the processing portion 120 from colliding with the end part parallel face 9A or the end part orthogonal face 9B due to movement of the processing portion 120 in the cutout 9, and the failure of the processing portion 120 can be reduced more reliably.

In the embodiment, the detection portion 110 or the signal cable 131 is provided at the side of the back face 3B of the conveyor belt 1 that comes into contact with the roller 10, and is covered with the covering member 115. In this manner, the detection portion 110 or the signal cable 131 never comes into direct contact with the roller 10. Therefore, the failure of the detection portion 110 or the signal cable 131 can be reliably reduced.

In the embodiment, the connector 130 is provided on the end part parallel face 9A (the cutout forming face) of the conveyor belt 1 forming the cutout 9. In this manner, the connector 130 never comes into direct contact with the roller 10. Therefore, the failure of the connector 130 can be reliably reduced.

In the embodiment, the signal cable 131 is disposed in a wavy shape. The conveyor belt 1 becomes flat on a driving puller, and is deformed on the roller 10. Since the conveyor belt 1 repeats an action of flatting or deformation, even in a case where the signal cable 131 is disposed in the wavy shape, whereby the conveyor belt 1 is deformed by a material conveyed after placed on the article placement face 3A, the signal cable 131 can cope with the shape of the conveyor belt 1. Therefore, a damage of the signal cable 131 can be suppressed.

In the embodiment, the cooling fin 27 is provided between the placement face side plate 21 and the back face side plate 23. In this manner, even in a case where the processing portion 120 is heated, air can be supplied into the connector 130 by means of driving of the conveyor belt 1. Therefore, the processing portion 120 (for example, the CPU or batteries) can be thermally radiated.

### (4) Exemplary Modifications

The abovementioned detection portion 110 according to the embodiment may be modified as follows. The same constituent element as the abovementioned detection portion 110 according to the embodiment is designated by the same reference numeral, and different constituent elements are is mainly described.

The abovementioned detection portion 110 and signal cable 131 according to the embodiment are covered with a covering member 115. On the other hand, a detection portion 110 and a signal cable 131 according to Exemplary Modifications are not covered with the covering member 115.

### (4-1) Exemplary Modification 1

First, structures of a detection portion 110A and a signal cable 131A according to Exemplary Modification 1 will be described with reference to the drawings. Fig. 8 is a sectional view showing a conveyor belt 1A according to Exemplary Modification 1. Fig. 9 is a plan view showing the conveyor belt 1A according to Exemplary Modification 1.

As shown in Fig. 8 and Fig. 9, the detection portion 110A is provided at the side of a back face 3B of an article placement face 3A of the conveyor belt 1A. In addition, the signal cable 131A is provided at the side of the back face 3B of the article placement face 3A of the conveyor belt 1A. That is, as described above, the detection portion 110A and the signal cable 131A are not covered with the covering member 115.

In Exemplary Modification 1, as is the case with the abovementioned functions and advantageous effects of the embodiment, a belt conveyor apparatus which is provided with a number of rollers 10 is capable of reliably detecting a failure of a respective one of the rollers 10 while suppressing higher costs of the belt conveyor apparatus or the frequency of a failure of a detection unit 100A.

### (4-2) Exemplary Modification 2

Next, structures of a detection portion 110B and a signal cable 131B according to Exemplary Modification 2 will be described with reference to the drawings. Fig. 10 is a sectional view showing a conveyor belt 1B according to Exemplary Modification 2. Fig. 11 is a plan view showing the conveyor belt 1B according to Exemplary Modification 2.

As shown in Fig. 10 and Fig. 11, the detection portion 110A is embedded in the conveyor belt 1B. In addition, the signal cable 131B is embedded in the back face 3B of the article placement face 3A.

In Exemplary Modification 2, as is the case with the abovementioned functions and advantageous effects of the embodiment, a belt conveyor apparatus which is provided with a number of rollers 10 is capable of reliably detecting a failure of a respective one of the rollers 10 while suppressing higher costs of the belt conveyor apparatus or a frequency of a failure of a detection unit 100.

In particular, the detection portion 110A and the signal cable 131B are embedded in the conveyor belt 1B. In this manner, the detection portion 110A or the signal cable 131 never come into direct contact with the roller 10. Therefore, failures of the detection portion 110A or the signal cable 131 can be reliably reduced.

### (5) Other Embodiments

As described above, while the contents of the present invention were disclosed through the embodiment of the present invention as described by the claims, it should not be understood that discussions and drawings forming a part of this disclosure limit the present invention. From this disclosure, a variety of substitutive embodiments, examples, and operational techniques would be self-evident to one skilled in the art.

For example, the embodiment of the present invention can be modified as follows. Specifically, the shape or structure and arrangement or the like of the roller 10 or the detection unit 100 are not limited in particular, and can be appropriately selected according to purposes.

While the embodiment described that the detection portion 110 is embedded in the side of the back face 3B of the article placement face 3A of the conveyor belt 1, the detection unit may be fixed to the side of the back face 3B without being limitative thereto.

While the embodiment described that three detection portions 110 are disposed in a state in which they are arranged in the widthwise direction of the conveyor belt 1, one detection unit may be disposed along the widthwise direction of the conveyor belt 1 without being limitative thereto.

While the embodiment described that the detection portion 110 is a pressure sensor, it is a matter of course that the detection portion 110 may be a temperature sensor or a distortion sensor employing thermocouples or the like, a shear force sensor, a magnetic sensor, an acceleration sensor, or a sonic sensor and the like.

While the embodiment described that the processing portion 120 is positioned in the cutout 9 as seen in a plan view of the conveyor belt 1, the processing portion 120 may be merely fixed to the widthwise end part 5 (a side end face 5A) without being limitative thereto. In this case, the connector 130 is provided on the side end face 5A, thereby facilitating demounting of the processing portion 120. In addition, the processing portion 120 may be protected by means of a cabinet or the like for housing the processing portion 120.

While the embodiment described that the processing portion 120 is comprised of a CPU, a memory, batteries, and an antenna, the processing portion 120 may be a structure which is capable of storing an output signal from the detection portion 110 by means of at least only a memory without being limitative thereto.

For example, in a case where batteries are not provided, electric power may be supplied from the outside (for example, by means of radio communication or an electromagnetic force, or by provision of electric wires). In addition, in a case where an antenna is not provided, an output signal from the detection portion 110 may be taken out by making the processing portion 120 (memory) demountable. At this time, driving of the conveyor belt 1 is stopped.

While the embodiment described that the link member 25 is comprised of the bolt 25A and the nut 25B, it is sufficient if the processing portion 120 can be secured by linking the placement face side plate 21 and the back side plate 23 with each other, without being limitative thereto.

While the embodiment described that the signal cable 131 is disposed in a wavy shape, it is a matter of course that the signal cable may be disposed in a linear shape without being limitative thereto.

Thus, it is a matter of course that the present invention includes a variety of embodiments or the like which are not described herein. Therefore, technical scope of the present invention is defined according to the scope of the claims.

### INDUSTRIAL APPLICABILITY

As described above, the present invention is applicable in a conveyor belt of a belt conveyor which is provided with a number of rollers for conveying transportation materials such as earth and soil or coal, since a detection unit for processing an output signal from a sensor for detecting a rotational failure is provided at a widthwise end part of the conveyor belt, thereby making it possible to suppress higher costs of the belt conveyor apparatus or a frequency of a failure of the detection unit.

### DISCRIPTION OF REFERENCE NUMERAL

1, 1A, 1B: conveyor belt, 3A: material placement face, 3B: back face, 5: widthwise end part, 5A: side end face, 7: mount portion, 9A: end part parallel face (cutoff forming face), 10: roller, 11: central roller, 13: end part roller, 21: placement face side plate, 23: back face side plate, 25: link member, 25A: bolt, 25B: nut, 27: cooling fin, 100,100A,100B: detection unit, 110,110A,110B: detection portion, 111: central sensor, 113:end part sensor, 115: covering member, 120: processing portion, 130: connector, 131,131A,131B: signal cable

## Claims

1. A conveyor belt (1,1A,1B) employed in a belt conveyor apparatus which comprises:
a plurality of rollers (10);
a detection portion (100,100A,100B) configured to detect a state of the rollers (10); and
a demountable processing portion (120) configured to connect to the detection portion (100,100A,100B), for processing an output signal from the detection portion (100,100A,100B), wherein
the conveyor belt (1,1A,1B) has a mount portion (7) on which the processing portion (120) is mounted, **characterized in that**,
the mount portion (7) is provided at a widthwise end part (5) of the conveyor belt (1,1A,1B).

2. The conveyor belt (1,1A,1B) according to claim 1, wherein:
the mount portion (7) includes a cutout (9) which is formed at the widthwise end part (5) as seen in a plan view of the conveyor belt (1,1A,1B); and
the processing portion (120) is positioned in the cutout (9) as seen in the plan view of the conveyor belt (1,1A,1B).

3. The conveyor belt (1,1A,1B) according to claim 1 or 2, wherein a thickness of the processing portion (120) is smaller than a thickness of the conveyor belt (1,1A,1B).

4. The conveyor belt (1,1A,1B) according to claims 2 and 3, comprising:
a placement face side plate (21) arranged at a placement face side (3A) of the conveyor belt (1,1A,1B) on which an article to be conveyed is to be placed, the placement face side plate (21) covering the cutout (9);
a back face side plate (23) arranged at a back face side (3B) of the conveyor belt (1,1A,1B) that is positioned at an opposite side of the placement face side (3A), the back face side plate (23) covering the cutout (9), and
a link member (25) configured to link the placement face side plate (21) and the back face side plate (23) with each other,
wherein the processing portion (120) is positioned between the placement face side plate (21) and the back face side plate (23).

5. The conveyor belt (1,1A,1B) according to any one of claims 1 to 4, wherein
the detection portion (100,100A,100B) is provided at the back face side (3B) of the conveyor belt (1) that comes into contact with the rollers (10) and
the detection portion (100,100A,100B) is covered with a covering member (115).

6. The conveyor belt (1,1A,1B) according to any one of claims 1 to 5, wherein the detection portion (100,100A,100B) is embedded in the conveyor belt (1,1A,1B).

7. The conveyor belt (1,1A,1B) according to any one of claims 1 to 6, wherein
a connector (130) which is connected to a signal cable (131,131A,131B) for transmitting an output signal from the detection portion (100,100A,100B) and to which the processing portion (120) is connected, is provided at the widthwise end part (5).

8. The conveyor belt (1,1A,1B) according to claims 7, wherein
the connector (130) is provided on a cutout forming face (9A) of the conveyor belt (1,1A,1B), the cutout forming face (9A) forming the cutout (9).

## Patentansprüche

1. Förderband (1, 1A, 1B), welches in einer Förderbandvorrichtung verwendet wird, welches umfasst:
eine Mehrzahl von Rollen (10);
einen Erfassungsteil (100, 100A, 100B), welcher zum Erfassen eines Zustands der Rollen (10) konfiguriert ist; und
einen abbaubaren Verarbeitungsteil (120), welcher zum Verbinden mit dem Erfassungsteil (100, 100A, 100B) konfiguriert ist, zum Verarbeiten eines Ausgangssignals aus dem Erfassungsteil (100, 100A, 100B), wobei
das Förderband (1, 1A, 1B) einen Halteteil (7) aufweist, auf welchem der Verarbeitungsteil (120) gehalten ist, **dadurch gekennzeichnet, dass**
der Halteteil (7) an einem breitseitigen Endteil (5) des Förderbands (1, 1A, 1B) vorgesehen ist.

2. Förderband (1, 1A, 1B) nach Anspruch 1, wobei:
der Halteteil (7) eine Aussparung (9) umfasst, welche, in einer Draufsicht des Förderbands (1, 1A, 1B), an dem breitseitigen Endteil (5) geformt ist; und
der Verarbeitungsteil (120), in einer Draufsicht des Förderbands (1, 1A, 1B), in der Aussparung (9) angeordnet ist.

3. Förderband (1, 1A, 1B) nach Anspruch 1 oder 2, wobei die Dicke des Verarbeitungsteils (120) kleiner als die Dicke des Förderbands (1,1A, 1B) ist.

4. Förderband (1, 1A, 1B) nach Anspruch 2 und 3, umfassend:
eine Auflageflächenseitenplatte (21), welche auf einer Auflageflächenseite (3A) des Förderbands (1, 1A, 1B) angeordnet ist, auf dem ein zu fördernder Artikel aufgelegt werden muss, wobei die Auflageflächenseitenplatte (21) die Aussparung (9) abdeckt;
eine Rückflächenseitenplatte (23), welche auf einer Rückflächenseite (3B) des Förderbands (1, 1A, 1B) angeordnet ist, welche auf einer entgegengesetzten Seite relativ zur Auflageflächenseite (3A) angeordnet ist, wobei die Rückflächenseitenplatte (23) die Aussparung (9) abdeckt, und
ein Verbindungselement (25), welches zum Verbinden der Auflageflächenseitenplatte (21) und der Rückflächenseitenplatte (23) miteinander konfiguriert ist,
wobei der Verarbeitungsteil (120) zwischen der Auflageflächenseitenplatte (21) und der Rückflächenseitenplatte (23) angeordnet ist.

5. Förderband (1, 1A, 1B) nach einem der Ansprüche 1 bis 4, wobei
der Erfassungsteil (100, 100A, 100B) auf der Rückenflächenseite (3B) des Förderbands (1) vorgesehen ist, welche mit den Rollen (10) in Kontakt gelangt, und
der Erfassungsteil (100, 100A, 100B) von einem Deckelement (115) abgedeckt ist.

6. Förderband (1, 1A, 1B) nach einem der Ansprüche 1 bis 5, wobei der Erfassungsteil (100, 100A, 100B) im Förderband (1, 1A, 1B) eingebettet ist.

7. Förderband (1, 1A, 1B) nach einem der Ansprüche 1 bis 6, wobei
ein Stecker (130), welcher mit einem Signalkabel (131, 131A, 131B) zum Übertragen eines Ausgangssignals aus dem Erfassungsteil (100, 100A, 100B) verbunden ist und mit dem der Verarbeitungsteil (120) verbunden ist, am breitseitigen Endteil (5) vorgesehen ist.

8. Förderband (1, 1A, 1B) nach Anspruch 7, wobei
der Stecker (130) auf einer Aussparungsformfläche (9A) des Förderbands (1, 1A, 1B) vorgesehen ist, wobei die Aussparungsformfläche (9A) die Aussparung (9) bildet.

## Revendications

1. Courroie transporteuse (1, 1A, 1B) utilisée dans un appareil de transport à courroie, comprenant :
plusieurs rouleaux (10) ;
une partie de détection (100, 100A, 100B) configurée pour détecter un état des rouleaux (10) ; et
une partie de traitement démontable (120), configurée pour être connectée à la partie de détection (100, 100A, 100B) pour traiter un signal de sortie provenant de la partie de détection (100, 100A, 100B), dans laquelle :
la courroie transporteuse (1, 1A, 1B) comporte une partie de montage (7) sur laquelle est montée la partie de traitement (120) ; **caractérisée en ce que** :
la partie de montage (7) est agencée au niveau d'une partie d'extrémité dans le sens de la largeur (5) de la courroie transporteuse (1, 1A, 1B).

2. Courroie transporteuse (1, 1A, 1B) selon la revendication 1, dans laquelle :
la partie de montage (7) englobe une entaille (9) formée au niveau de la partie d'extrémité dans le sens de la largeur (5), vue dans une vue en plan de la courroie transporteuse (1, 1A, 1B) ; et
la partie de traitement (120) est positionnée dans l'entaille (9), vue dans la vue en plan de la courroie transporteuse (1, 1A, 1B).

3. Courroie transporteuse (1, 1A, 1B) selon les revendications 1 ou 2, dans laquelle une épaisseur de la partie de traitement (120) est inférieure à une épaisseur de la courroie transporteuse (1, 1A, 1B).

4. Courroie transporteuse (1, 1A, 1B) selon les revendications 2 et 3, comprenant :
une plaque du côté de la face de positionnement (21), agencée au niveau d'un côté de la face de positionnement (3A) de la courroie transporteuse (1, 1A, 1B) sur laquelle un article devant être transporté doit être positionné, la plaque du côté de la face de positionnement recouvrant l'entaille (9).
une plaque du côté de la face arrière (23) agencée au niveau d'un côté de la face arrière (3B) de la courroie transporteuse (1, 1A, 1B), positionnée au niveau d'un côté opposé au côté de la face de positionnement (3A), la plaque du côté de la face arrière (23) recouvrant l'entaille (9) ; et
un élément de liaison (25), destiné à relier la plaque du côté de la face de positionnement (21) et la plaque du côté de la face arrière (23) l'une à l'autre ;
dans laquelle la partie de traitement (120) est positionnée entre la plaque du côté de la face de positionnement (21) et la plaque du côté de la face arrière (23).

5. Courroie transporteuse (1, 1A, 1B) selon l'une quelconque des revendications 1 à 4, dans laquelle :
la partie de détection (100, 100A, 100B) est agencée au niveau du côté de la face arrière (3B) de la courroie transporteuse (1), qui entre en contact avec les rouleaux (10) ; et
la partie de détection (100, 100A, 100B) est recouverte par un élément de couverture (115).

6. Courroie transporteuse (1, 1A, 1B) selon l'une quelconque des revendications 1 à 5, dans laquelle la partie de détection (100, 100A, 100B) est encastrée dans la courroie transporteuse (1, 1A, 1B).

7. Courroie transporteuse (1, 1A, 1B) selon l'une quelconque des revendications 1 à 6, dans laquelle :
un connecteur (130), connecté à un câble de signaux (131, 131A, 131B), pour transmettre un signal de sortie à partir de la partie de détection (100, 100A, 100B) et à laquelle la partie de traitement (120) est connectée, est agencé au niveau de la partie d'extrémité dans le sens de la largeur (5).

8. Courroie transporteuse (1, 1A, 1B) selon la revendication 7, dans laquelle :
le connecteur (130) est agencé sur une face formant une entaille (9A) de la courroie transporteuse (1, 1A, 1B), la face formant une entaille (A) formant l'entaille (9).
